# EUROPÄISCHE PATENTSCHRIFT

(11) **EP 2 220 413 B1**
(45) Veröffentlichungstag und Bekanntmachung des Hinweises auf die Patenterteilung: **16.08.2017**
(21) Anmeldenummer: 08849140.2
(22) Anmeldetag: 04.11.2008
(51) Int. Cl.: F16K 31/06

(54) **ELEKTROMAGNETISCHE STELLEINHEIT EINES MAGNETVENTILS UND VERFAHREN ZUR HERSTELLUNG EINER SOLCHEN STELLEINHEIT**
ELECTROMAGNETIC ACTUATING UNIT OF A SOLENOID VALVE, AND METHOD FOR THE PRODUCTION OF SUCH AN ACTUATING UNIT
UNITÉ DE COMMANDE ÉLECTROMAGNÉTIQUE POUR UNE ÉLECTROVANNE ET PROCÉDÉ DE FABRICATION DE LADITE UNITÉ DE COMMANDE

(30) Priorität: 16.11.2007 DE 102007054652
(43) Veröffentlichungstag der Anmeldung: 25.08.2010
(73) Patentinhaber: Schaeffler Technologies AG & Co. KG, 91074 Herzogenaurach (DE)
(72) Erfinder: ROSS, Christoph, 96047 Bamberg (DE); GROESCHEL, Josef, 91327 Gössweinstein (DE)
(86) Internationale Anmeldenummer: PCT/EP2008/064937
(87) Internationale Veröffentlichungsnummer: WO 2009/062864

(56) Entgegenhaltungen:
- WO-A-2006/051859
- DE-A1- 3 116 402
- US-A- 5 779 220
- US-A1- 2006 017 535
- US-B1- 6 615 780

## Beschreibung

### Gebiet der Erfindung

Die Erfindung betrifft eine elektromagnetische Stelleinheit eines Magnetventils, insbesondere eines hydraulischen Wegeventils mit einem Anker, der innerhalb eines Ankerraums axial verschiebbar angeordnet ist, und einem Polkern, der in einer Aufnahme angeordnet ist und den Ankerraum in einer Bewegungsrichtung des Ankers begrenzt.

Derartige Wegeventile werden beispielsweise in Brennkraftmaschinen zur Ansteuerung von hydraulischen Nockenwellenverstellern verwendet. Hydraulische Nockenwellenversteller sind im Stand der Technik hinreichend beschrieben, so dass an dieser Stelle auf eine eingehende Erläuterung verzichtet werden kann. Wegeventile bestehen aus einer elektromagnetischen Stelleinheit und einem Ventilabschnitt. Der Ventilabschnitt stellt den hydraulischen Abschnitt des Wegeventils dar, wobei an diesem zumindest ein Zulaufanschluss, mindestens ein Arbeitsanschluss und ein Tankanschluss ausgebildet sind. Mittels der elektromagnetischen Stelleinheit können bestimmte Anschlüsse des Ventilabschnitts hydraulisch miteinander verbunden werden und somit die Druckmittelströme gelenkt werden.

Für den Einsatz eines Wegeventils zur Steuerung eines Nockenwellenverstellers ist dieses in der Regel als 4/3- oder 4/2-Proportionalwegeventil ausgebildet. Ein Nockenwellenversteller mit einem 4/2-Proportionalwegeventil ist beispielsweise aus der DE 102 11 467 A1 bekannt.

In der DE 10 2005 048 732 A1 ist eine elektromagnetische Stelleinheit eines hydraulischen Wegeventils mit einem innerhalb eines Ankerraums axial verschiebbar angeordneten Anker und einem Polkern beschrieben. Die elektromagnetische Stelleinheit umfasst zumindest einen Abflusskanal, der sowohl mit dem Ankerraum als auch mit dem Äußeren der Stelleinheit kommuniziert. Über den Abflusskanal kann Motoröl im Ankerraum aus der Stelleinheit hinausgeleitet werden, wodurch eine Spülwirkung innerhalb des Ankerraums erreicht werden kann. Eine weitere Stelleinheit eines Magnetventils wird aus der US 6,615,780 B1 bekannt. Vor allem bei Proportionalventilmagneten ist es notwendig, die Kennlinie des Magneten an die jeweils vorliegenden Randbedingungen anzupassen. Um eine präzise Steuerung der Durchflussmengen und -zeiten im Ventilabschnitt zu gestatten, sollte die Kennlinie der elektromagnetischen Stelleinheit einen möglichst konstanten Verlauf der Magnetkraft über dem gesamten Ventilhub aufweisen. Im Stand der Technik erfolgt die Anpassung der Kennlinie an diesen gewünschten Verlauf über die Modifikation der Geometrie des Polkerns. Hierzu muss der üblicherweise umformtechnisch hergestellte Polkern einer kostenintensiven Zusatzbearbeitung unterzogen werden.

Die Aufgabe der vorliegenden Erfindung besteht somit darin, eine elektromagnetische Stelleinheit zur Verfügung zu stellen, bei der zur Anpassung der Kennlinie der Stelleinheit keine Zusatzbearbeitung des Polkerns erforderlich ist. Die Kennlinienanpassung soll vielmehr durch einfacher auszuführende konstruktive Maßnahmen möglich werden. Die elektromagnetische Stelleinheit soll trotz der wünschenswerten Kennlinienanpassung preiswert zu fertigen sein.

Zur Lösung der erfindungsgemäßen Aufgabe dient eine elektromagnetische Stelleinheit gemäß dem beigefügten Anspruch 1 sowie ein Verfahren zur Herstellung einer elektromagnetischen Stelleinheit gemäß dem beigefügten Anspruch 8. Die erfindungsgemäße elektromagnetische Stelleinheit zeichnet sich dadurch aus, dass die Geometrie des Ankers konstruktiv verändert wird, um die Kennlinie der magnetischen Stelleinheit anzupassen.

Die bei der erfindungsgemäßen Lösung realisierte Kennlinienbeeinflussung über die Geometrie des Ankers ist sehr vorteilhaft. Da der Anker ohnehin durch eine zerspanende Bearbeitung, in der Regel durch Drehen, beispielsweise mittels CNC-Maschinen, hergestellt wird, kann die jeweils erforderliche geometrische Änderung bereits in das während der Herstellung des Ankers abzuarbeitende CNC-Programm integriert werden. Dies führt zu keiner wesentlichen Verlängerung der Bearbeitungszeit. Auf die bislang erforderliche kostenintensive Nachbearbeitung des Polkerns kann verzichtet werden. Der Polkern kann daher komplett umformtechnisch hergestellt werden, was eine immense Zeit und Kostenersparnis gegenüber herkömmlichen Herstellungsverfahren zur Kennlinienanpassung mit sich bringt.

Die an den jeweiligen Einsatzzweck der Stelleinheit angepasste Geometrie des Ankers muss zunächst berechnet werden. Dem Fachmann sind die Berechnungsmodelle bekannt, durch welche die Abhängigkeit des Kennlinienverlaufs der elektromagnetischen Stelleinheit von der Geometrie der den Magnetfluss leitenden Bauteile abgebildet werden kann. Anstelle der bisher üblichen Formänderung am Polkern wird erfindungsgemäß nun die Polkernform so gewählt, dass eine zerspanende Nachbearbeitung des Polkern nach dessen umformtechnischer Herstellung nicht mehr erfolgt und stattdessen die Geometrie des Ankers angepasst wird. Der Anker weist an seinem dem Polkern zugewandten Ende eine umlaufende sägezahnförmige, V-förmige oder kreisbogenförmige Vertiefung auf. Die gegenüber der herkömmlichen Ankerform aus Gründen der Kennlinienbeeinflussung angepasste Geometrie lässt sich regelmäßig durch zerspanende Bearbeitung herstellen. Denkbar ist jedoch bei abgewandelten Ausführungsformen auch die Herstellung des Ankers durch Umformen.

Nach einer besonders bevorzugten Ausführungsform dient die elektromagnetische Stelleinheit zur Steuerung eines hydraulischen Wegeventils eines Nockenwellenverstellers für Brennkraftmaschinen. Bei anderen vorteilhaften Ausführungsformen kann die elektromagnetische Stelleinheit auch zur Steuerung von schaltbaren Ventilspielausgleichselementen bei Brennkraftmaschinen dienen. Solche schaltbaren Ventilausgleichselemente sind beispielsweise schaltbare Tassenstößel, schaltbare Rollenstößel oder schaltbare Schlepphebel. Als vorteilhaft hat es sich dabei erwiesen, wenn die elektromagnetische Stelleinheit am Zylinderkopf der Brennkraftmaschine angeordnet ist.

Die elektromagnetische Stelleinheit kann vorzugsweise zur Steuerung eines als 4/3-, 4/2- oder 3/2-Wegeventil dienen. Weiterhin ist es vorteilhaft, wenn die elektromagnetische Stelleinheit als Proportionalventilmagnet ausgeführt ist und zur Steuerung eines Proportionalwegeventils dient.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnung. Es zeigen:
- Fig. 1: ein hydraulisches 4/3-Wegeventil mit einer erfindungsgemäßen elektromagnetischen Stelleinheit in einer Längsschnittdarstellung;
- Fig. 2: eine Teilansicht einer ersten Ausführungsform eines bei der erfindungsgemäßen elektromagnetischen Stelleinheit verwendeten Ankers;
- Fig. 3: eine Teilansicht einer zweiten Ausführungsform eines bei der erfindungsgemäßen elektromagnetischen Stelleinheit verwendeten Ankers;
- Fig. 4: eine Teilansicht einer dritten Ausführungsform eines bei der erfindungsgemäßen elektromagnetischen Stelleinheit verwendeten Ankers;
- Fig. 5: ein hydraulisches 3/2-Wegeventil mit der erfindungsgemäßen elektromagnetischen Stelleinheit in einer Längsschnittdarstellung.

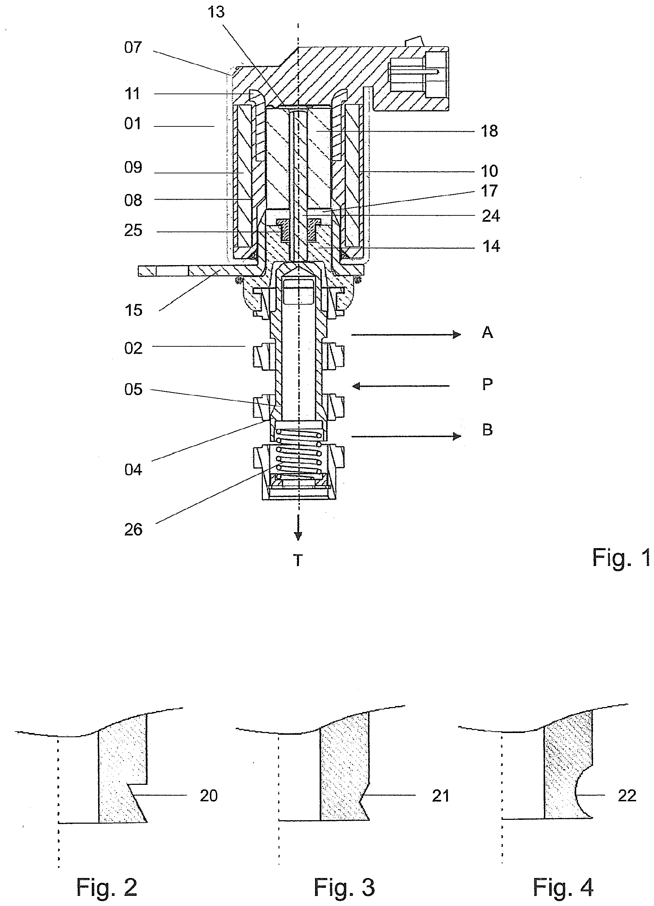

Fig. 1 zeigt ein hydraulisches 4/3-Wegeventil mit einer erfindungsgemäßen elektromagnetischen Stelleinheit in einer Längsschnittdarstellung. Ein bevorzugter Anwendungsfall dieses Wegeventils ist die Regelung der Stellung eines hydraulischen Nockenwellenverstellers.

Das hydraulische Wegeventil besteht aus einer elektromagnetischen Stelleinheit 01 und einem Ventilabschnitt 02. Der Ventilabschnitt 02 setzt sich aus einem Ventilgehäuse 04 und einem Steuerkolben 05 zusammen. Das Ventilgehäuse 04 weist einen Zulaufanschluss P, zwei Arbeitsanschlüsse A und B sowie einen Ablaufanschluss T auf. Der Steuerkolben 05 ist innerhalb des Ventilgehäuses 04 axial verschiebbar angeordnet. Durch geeignetes Positionieren des Steuerkolbens 05 relativ zum Ventilgehäuse 04 kann jeder der Arbeitsanschlüsse A, B entweder mit dem Zulaufanschluss P oder dem Ablaufanschluss T verbunden werden. Die Arbeitsanschlüsse A, B stehen über Druckmittelleitungen (nicht dargestellt) mit Druckkammern des Nockenwellenverstellers (nicht dargestellt) in hydraulischer Verbindung. Durch entsprechendes Positionieren des Steuerkolbens 05 innerhalb des Ventilgehäuses 04 kann wahlweise einzelnen Druckkammern des Nockenwellenverstellers Druckmittel zugeführt bzw. aus diesem abgeführt werden und somit die Phasenlage der Nockenwelle relativ zur Kurbelwelle eingestellt werden.

In axialer Richtung versetzt zu dem Ventilabschnitt 02 ist die elektromagnetische Stelleinheit 01 angeordnet. Als elektromagnetische Stelleinheit 01 kommt vorzugsweise ein Proportionalventilmagnet zum Einsatz. Die elektromagnetische Stelleinheit 01 weist einen innerhalb eines Gehäuses 07 angeordneten Spulenkörper 08 auf. Der Spulenkörper 08 trägt eine aus mehreren Windungen eines Drahtes bestehende Spule 09 und ist zumindest teilweise von einer Spulenumspritzung 10 aus nichtmagnetisiertem Material umgeben. Am Spulenkörper 08 ist ein Magnetjoch 11 angeordnet. Ein Ankerführungsrohr 13 erstreckt sich in radialer Richtung zum Magnetjoch 11. Die elektromagnetische Stelleinheit 02 weist weiterhin einen Polkern 14 auf, der mittels einer Aufnahme 15 am Gehäuse 07 befestigt ist.

Das Ankerführungsrohr 13 und der Polkern 14 begrenzen einen Ankerraum 17, in dem ein axial verschiebbarer Anker 18 angeordnet ist. Durch Modifikation der Geometrie des Ankers 18 kann die Kennlinie der elektromagnetischen Stelleinheit 01 an die jeweiligen Erfordernisse angepasst werden. Die für den konkreten Anwendungsfall erforderliche Geometrie des Ankers 18 muss berechnet werden. Die Möglichkeit der Kennlinienbeeinflussung ist vor allem bei elektromagnetischen Stelleinheiten 01, die einen Proportionalventilmagneten verwenden, von großer Bedeutung. Hierbei sollte gewährleistet sein, dass die Kennlinie einen möglichst linearen, stetigen Verlauf über den gesamten Ventilhub aufweist.

Den Figuren 2, 3 und 4 können Beispiele für verschiedene Ausführungsformen des Ankers 18 entnommen werden. Bei der in Figur 2 gezeigten Ausführungsform weist der Anker 18 an seinem dem Polkern 14 zugewandten Ende eine umlaufende sägezahnförmige Vertiefung 20 auf. Die in Figur 3 dargestellte Ausführungsform zeichnet sich dadurch aus, dass der Anker an seinem dem Polkern 14 zugewandten Ende eine umlaufende V-förmige Vertiefung 21 aufweist. Bei der in Figur 4 gezeigten Ausführungsform ist der Anker 18 an seinem dem Polkern 14 zugewandten Ende mit einer umlaufenden kreisbogenförmigen Vertiefung 22 versehen. Die zum Anpassen der Ankergeometrie an die jeweiligen Erfordernisse erforderlichen geometrischen Änderungen können in das zur Ankerherstellung verwendete CNC-Programm integriert werden, sodass keine zusätzlichen Bearbeitungsschritte erforderlich werden.

Mit dem Anker 18 ist eine Stößelstange 24 verbunden. Die Stößelstange 24 erstreckt sich durch eine am Polkern 14 ausgebildete Öffnung. Ein Ende der Stößelstange 24 liegt am Steuerkolben 05 des Ventilabschnitts 02 an. Innerhalb der Öffnung kann ein Gleitlager 25 vorgesehen sein, um Reibungsverluste an dieser Stelle zu minimieren.

Während des Betriebs der Brennkraftmaschine wird durch Bestromung der Spule 09 ein Magnetfeld innerhalb der elektromagnetischen Stelleinheit 01 generiert. Der Polkern 14, das Gehäuse 07, das Magnetjoch 11 und der Anker 18 dienen dabei als Flusspfad, der durch einen Luftspalt zwischen dem Anker 18 und dem Polkern 14 vervollständigt wird. Dabei wirkt eine Magnetkraft in Richtung des Polkerns 14 auf den Anker 18, die abhängig von der Bestromung der Spule 09 ist. Durch Ausbalancieren der magnetischen Kraft, die auf den Anker 18 wirkt, und der durch eine Feder 26 auf den Steuerkolben 05 wirkenden Federkraft, kann der Anker 18 und damit der Steuerkolben 05 in jeder beliebigen Stellung zwischen zwei Endstellungen positioniert werden.

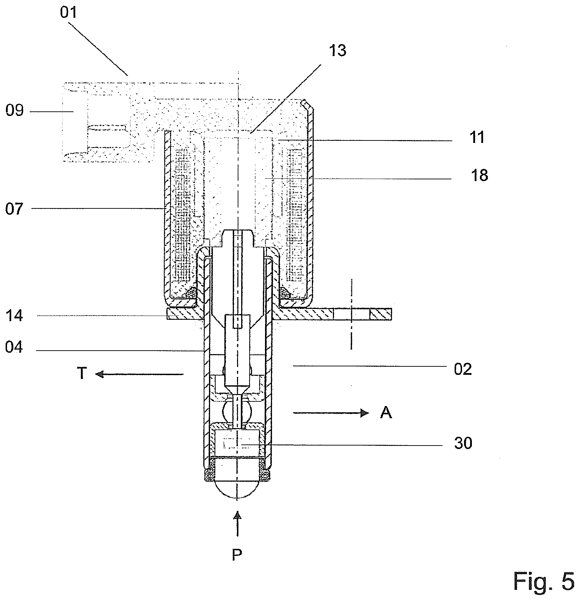

Fig. 5 zeigt ein hydraulisches 3/2-Wegeventil mit der erfindungsgemäßen elektromagnetischen Stelleinheit in einer Längsschnittdarstellung. Das 3/2-Wegeventil wird bevorzugt zur Steuerung schaltbarer Ventilspielausgleichselemente, wie beispielsweise schaltbare Tassenstößel, schaltbare Rollenstößel oder schaltbare Schlepphebel verwendet.

Das hydraulische 3/2-Wegeventil besteht wiederum aus der elektromagnetischen Stelleinheit 01 und dem Ventilabschnitt 02. Der Ventilabschnitt 02 umfasst das Ventilgehäuse 04. Innerhalb des Ventilgehäuses sind ein Schließer 29 und ein Dichtkörper 30 angeordnet. Das Ventilgehäuse 04 weist einen Zulaufanschluss P, einen Arbeitsanschluss A sowie einen Ablaufanschluss T auf. Der Arbeitsanschluss A steht über eine Druckmittelleitung (nicht dargestellt) mit dem zu schaltenden Ventilspielausgleichselement (nicht dargestellt) in hydraulischer Verbindung.

In axialer Richtung versetzt zu dem Ventilabschnitt 02 ist die elektromagnetische Stelleinheit 01 angeordnet. Als elektromagnetische Stelleinheit 01 kommt vorzugsweise ein Proportionalventilmagnet zum Einsatz. Die elektromagnetische Stelleinheit 01 umfasst wiederum das Gehäuse 07, die Spule 09 und das Magnetjoch 11. Das Ankerführungsrohr 13 erstreckt sich in radialer Richtung zum Magnetjoch 11. Die elektromagnetische Stelleinheit 01 weist weiterhin den Polkern 14, der am Gehäuse 07 befestigt ist, und den Anker 18 auf.

Wie bereits bei Fig. 1 beschrieben, kann auch in dieser Ausführungsform die Geometrie des Ankers 18 modifiziert werden, um hierdurch die Kennlinie der elektromagnetischen Stelleinheit 01 an die jeweiligen Erfordernisse anzupassen. Der Anker 18 steht mit dem Schließer 29 des Ventilabschnitts 02 in Verbindung. Im Betrieb gibt es lediglich zwei Ventilzustände, und zwar "geöffnet" und "geschlossen". Die bedeutet, dass entweder voller Druck oder gar kein Druck geschaltet wird.

### Bezugszeichen liste

- 01: elektromagnetische Stelleinheit
- 02: Ventilabschnitt
- 03: -
- 04: Ventilgehäuse
- 05: Steuerkolben
- 06: -
- 07: Gehäuse
- 08: Spulenkörper
- 09: Spule
- 10: Spulenumspritzung
- 11: Magnetjoch
- 12: -
- 13: Ankerführungsrohr
- 14: Polkern
- 15: Aufnahme
- 17: Ankerraum
- 18: Anker
- 20: sägezahnförmige Vertiefung
- 21: V-förmige Vertiefung
- 22: kreisbogenförmige Vertiefung
- 24: Stößelstange
- 25: Gleitlager
- 26: Feder
- 29: Schließer
- 30: Dichtkörper

- A, B: Arbeitsanschlüsse
- P: Zulaufanschluss
- T: Ablaufanschluss

## Patentansprüche

1. Elektromagnetische Stelleinheit (01) eines Magnetventils mit einem Anker (18), der innerhalb eines Ankerraums (17) axial verschiebbar angeordnet ist, und einem umformtechnisch hergestellten Polkern (14), der in einer Aufnahme (15) angeordnet ist und den Ankerraum (17) in einer Bewegungsrichtung des Ankers (18) begrenzt, **dadurch gekennzeichnet, dass** die Geometrie des Ankers (18) derart gewählt ist, dass dadurch Nichtlinearitäten der Kraft-Weg-Kennlinie der elektromagnetischen Stelleinheit (01) reduziert werden, ohne dass die Geometrie des Polkerns hierzu angepasst ist, indem der Anker (18) an seinem dem Polkern (14) zugewandten Ende eine umlaufende sägezahnförmige Vertiefung (20) oder ein umlaufende V-förmige Vertiefung (21) oder eine umlaufende kreisbogenförmige Vertiefung (22) aufweist.

2. Elektromagnetische Stelleinheit (01) nach Anspruch 1, **dadurch gekennzeichnet, dass** sie Teil eines hydraulischen Wegeventils, insbesondere eines Nockenwellenverstellers für Brennkraftmaschinen ist.

3. Elektromagnetische Stelleinheit (01) nach einem der Ansprüche 1 bis 2, **dadurch gekennzeichnet, dass** sie Teil eines Magnetventils zur Steuerung von schaltbaren Ventilspielausgleichselementen bei Brennkraftmaschinen ist.

4. Elektromagnetische Stelleinheit (01) nach Anspruch 3, **dadurch gekennzeichnet, dass** die schaltbaren Ventilspielausgleichselemente schaltbare Tassenstößel, schaltbare Rollenstößel oder schaltbare Schlepphebel sind.

5. Elektromagnetische Stelleinheit (01) nach einem der Ansprüche 1 bis 4, **dadurch gekennzeichnet, dass** sie Teil eines 4/3-, 4/2- oder 3/2-Wegeventils ist.

6. Elektromagnetische Stelleinheit (01) nach einem der Ansprüche 2 bis 5, **dadurch gekennzeichnet, dass** sie am Zylinderkopf einer Brennkraftmaschine angeordnet ist.

7. Elektromagnetische Stelleinheit (01) nach einem der Ansprüche 1 bis 6, **dadurch gekennzeichnet, dass** sie einen Proportionalventilmagnet umfasst, und dass sie Teil eines Proportionalwegeventils ist.

8. Verfahren zur Herstellung einer elektromagnetischen Stelleinheit (01) eines hydraulischen Wegeventils mit einem Anker (18), der innerhalb eines Ankerraums (17) axial verschiebbar angeordnet ist, und einem Polkern (14), der in einer Aufnahme (15) angeordnet ist und den Ankerraum (17) in einer Bewegungsrichtung des Ankers (18) begrenzt, die folgenden Schritte umfassend:
- Festlegung der gewünschten Kraft-Weg-Kennlinie der elektromagnetischen Stelleinheit (01);
- Umformtechnische Herstellung des Polkerns (14) ohne weitere Nachbearbeitung der Geometrie;
- Bestimmung der Geometrie des Ankers (18), welche im Zusammenhang mit den anderen magnetisch wirksamen Bauteilen der Stelleinheit (01) zu der festgelegten Kennlinie führt, indem der Anker (18) an seinem dem Polkern (14) zugewandten Ende eine umlaufende sägezahnförmige Vertiefung (20) oder ein umlaufende V-förmige Vertiefung (21) oder eine umlaufende kreisbogenförmige Vertiefung (22) aufweist;
- Herstellung des Ankers (18) in der zuvor bestimmten Geometrie;
- Zusammenbau der elektromagnetischen Stelleinheit (01).

## Claims

1. Electromagnetic actuating unit (01) of a solenoid valve having an armature (18), which is arranged within an armature space (17) in an axially displaceable manner, and a pole core (14) which is produced by shaping and arranged in a holder (15) and bounds the armature space (17) in one direction of movement of the armature (18), **characterized in that** the geometry of the armature (18) is selected in such a way that nonlinearities in the force/displacement characteristic curve of the electromagnetic actuating unit (01) are reduced as a result, without the geometry of the pole core being adapted for this, **in that** the armature (18) has an encircling sawtooth-like recess (20) or an encircling V-shaped recess (21) or an encircling recess (22) in the form of an arc of a circle at its end which faces the pole core (14).

2. Electromagnetic actuating unit (01) according to Claim 1, **characterized in that** it is part of a hydraulic directional valve, in particular a camshaft adjuster for internal combustion engines.

3. Electromagnetic actuating unit (01) according to either of Claims 1 and 2, **characterized in that** it is part of a solenoid valve for controlling switchable valve clearance compensation elements in internal combustion engines.

4. Electromagnetic actuating unit (01) according to Claim 3, **characterized in that** the switchable valve clearance compensation elements are switchable bucket tappets, switchable roller tappets or switchable cam followers.

5. Electromagnetic actuating unit (01) according to one of Claims 1 to 4, **characterized in that** it is part of a 4/3-, 4/2- or 3/2-way valve.

6. Electromagnetic actuating unit (01) according to one of Claims 2 to 5, **characterized in that** it is arranged on the cylinder head of an internal combustion engine.

7. Electromagnetic actuating unit (01) according to one of Claims 1 to 6, **characterized in that** it comprises a proportional valve solenoid, and **in that** it is part of a proportional directional valve.

8. Method for the production of an electromagnetic actuating unit (01) of a hydraulic directional valve having an armature (18), which is arranged within an armature space (17) in an axially displaceable manner, and a pole core (14) which is arranged in a holder (15) and bounds the armature space (17) in one direction of movement of the armature (18), comprising the following steps:
- defining the desired force/displacement characteristic curve of the electromagnetic actuating unit (01);
- producing the pole core (14) by shaping, without further post-processing of the geometry;
- determining the geometry of the armature (18) which, in connection with the other magnetically active components of the actuating unit (01), leads to the defined characteristic curve, in that the armature (18) has an encircling sawtooth-like recess (20) or an encircling V-shaped recess (21) or an encircling recess (22) in the form of an arc of a circle at its end which faces the pole core (14);
- production of the armature (18) with the geometry determined above;
- assembly of the electromagnetic actuating unit (0).

## Revendications

1. Unité de commande électromagnétique (01) d'une électrovanne comprenant un induit (18) qui est disposé coulissant dans le sens axial à l'intérieur d'un espace d'induit (17), et un noyau polaire (14) fabriqué par technique de façonnage, lequel est disposé dans un logement (15) et délimite l'espace d'induit (17) dans une direction de déplacement de l'induit (18), **caractérisée en ce que** la forme géométrique de l'induit (18) est choisie de telle sorte qu'elle permet de réduire les défauts de linéarité de la courbe force/course de l'unité de commande électromagnétique (01) sans que la forme géométrique du noyau polaire soit adaptée à cet effet, **en ce que** l'induit (18) possède, à son extrémité qui fait face au noyau polaire (14), une empreinte circulaire en forme de dents de scie (20) ou une empreinte circulaire en forme de V (21) ou une empreinte circulaire en forme d'arc de cercle (22).

2. Unité de commande électromagnétique (01) selon la revendication 1, **caractérisée en ce qu'**elle fait partie d'un distributeur hydraulique, notamment d'un mécanisme de positionnement d'arbre à cames pour des moteurs à combustion interne.

3. Unité de commande électromagnétique (01) selon l'une des revendications 1 à 2, **caractérisée en ce qu'**elle fait partie d'une électrovanne destinée à commander des éléments de compensation du jeu de soupape sur des moteurs à combustion interne.

4. Unité de commande électromagnétique (01) selon la revendication 2, **caractérisée en ce que** les éléments de compensation du jeu de soupape sont des poussoirs à couronne, des poussoirs à galet commutables ou des leviers oscillants commutables.

5. Unité de commande électromagnétique (01) selon l'une des revendications 1 à 4, **caractérisée en ce qu'**elle fait partie d'un distributeur 4/3, 4/2 ou 3/2.

6. Unité de commande électromagnétique (01) selon l'une des revendications 2 à 5, **caractérisée en ce qu'**elle est disposée sur la culasse d'un moteur à combustion interne.

7. Unité de commande électromagnétique (01) selon l'une des revendications 1 à 6, **caractérisée en ce qu'**elle comprend un aimant de vanne proportionnelle et **en ce qu'**elle fait partie d'un distributeur proportionnel.

8. Procédé de fabrication d'une unité de commande électromagnétique (01) d'un distributeur hydraulique comprenant un induit (18) qui est disposé coulissant dans le sens axial à l'intérieur d'un espace d'induit (17), et un noyau polaire (14) qui est disposé dans un logement (15) et délimite l'espace d'induit (17) dans une direction de déplacement de l'induit (18), comprenant les étapes suivantes :
- définition de la courbe force/course de l'unité de commande électromagnétique (01) ;
- fabrication du noyau polaire (14) par technique de façonnage sans reprise supplémentaire de la forme géométrique ;
- détermination de la forme géométrique de l'induit (18) qui, en association avec les autres composants magnétiquement actifs de l'unité de commande électromagnétique (01), donne lieu à la courbe définie en ce que l'induit (18) possède, à son extrémité qui fait face au noyau polaire (14), une empreinte circulaire en forme de dents de scie (20) ou une empreinte circulaire en forme de V (21) ou une empreinte circulaire en forme d'arc de cercle (22) ;
- fabrication de l'induit (18) dans la forme géométrique déterminée précédemment ;
- assemblage de l'unité de commande électromagnétique (01).
